# EUROPEAN PATENT APPLICATION

(11) **EP 4 583 590 A1**
(43) Date of publication of application: **09.07.2025**
(21) Application number: 23870732.7
(22) Date of filing: 25.09.2023
(51) Int. Cl.: H04W 52/02, H04W 74/08

(54) **DATA TRANSMISSION METHOD AND APPARATUS**

(30) Priority: 30.09.2022 CN 202211209793
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); PAN, Qi, Shenzhen, Guangdong 518129 (CN)
(74) Representative: Goddar, Heinz J.
(86) International application number: PCT/CN2023/121157
(87) International publication number: WO 2024/067502

(57) **Abstract**

This application provides a data transmission method and an apparatus. The method includes: When an access network device receives uplink information from a terminal device through SDT, the access network device sends a first message, where the first message is used to trigger a second core network device to stop buffering downlink data of the terminal device; and the access network device receives downlink data from the second core network device, and sends the downlink data to the terminal device through the SDT. **In** the foregoing process, when the terminal device triggers the SDT, the access network device may trigger the second core network device to stop or cancel buffering the downlink data of the terminal device, so that the second core network device can send the downlink data of the terminal device to the terminal device through the SDT. Therefore, when the terminal device is in an inactive state, the terminal device can directly obtain the downlink data without waiting to be paged by a network side, to improve data transmission efficiency and reduce power consumption of the terminal device.

## Description

### CROSS-REFERENCE TO RELATED APPLICATIONS

This application claims priority to Chinese Patent Application No. 202211209793.9, filed with the China National Intellectual Property Administration on September 30, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and an apparatus.

### BACKGROUND

In a system like a new radio (new radio, NR) system, a terminal device in a radio resource control (radio resource control, RRC) idle (idle) state or an RRC inactive (inactive) state may periodically wake up to monitor a paging (paging) message in a discontinuous reception (discontinuous reception, DRX) manner. A cycle of the periodic wake-up may be referred to as a DRX cycle. Paging messages are classified into a core network (core network, CN) paging message and a radio access network (radio access network, RAN) paging message, which are respectively initiated by a core network device and an access network device. The CN paging message is used to page the terminal device in the idle state, and the RAN paging message is used to page the terminal device in the inactive state.

A network side may configure different DRX cycles for different types of paging messages. Therefore, DRX used to monitor the CN paging message may also be referred to as idle DRX, and DRX used to monitor the RAN paging message may also be referred to as inactive DRX. To further reduce power consumption, the DRX cycle may be prolonged. In other words, the terminal device periodically wakes up to monitor the paging message by using an extended discontinuous reception (extended discontinuous reception, eDRX) cycle. Duration of an inactive eDRX cycle may exceed 10.24 seconds (seconds, s), so that the terminal device can enter a sleep state for longer time.

During a sleep period of the terminal device, on the network side, data that needs to be sent to the terminal device is buffered. However, longer sleep time of the terminal device indicates a larger amount of data buffered on the network side. In an implementation, the network side may page the terminal device when the terminal device is in the RRC inactive state, to cause the terminal device to switch to an RRC connected state, so as to transmit the data to the terminal device. After data transmission is completed, the terminal device switches to the RRC inactive state again.

In the foregoing data transmission process, the terminal device needs to perform state switching, causing a large amount of signaling exchanged with the network side and high power consumption of the terminal device.

### SUMMARY

This application provides a data transmission method and an apparatus, to improve data transmission efficiency of a terminal device in an RRC inactive state, and reduce power consumption of the terminal device.

According to a first aspect, this application provides a data transmission method. The method is applicable to a scenario in which a terminal device in an RRC inactive state performs information transmission by using a small data transmission process. The method is performed by an access network device or a module in the access network device. Herein, an example in which the method is performed by the access network device is used for description. The method includes: The access network device receives uplink information from the terminal device through small data transmission SDT, where a resource used for transmission of the uplink information is a random access resource or a configured grant resource used for the SDT. The access network device sends a first message, where the first message is used to trigger a second core network device to stop buffering downlink data of the terminal device. The access network device receives downlink data from the second core network device, and sends the downlink data to the terminal device through the SDT.

In the foregoing process, when the terminal device triggers the SDT, the access network device may trigger the second core network device to stop or cancel buffering the downlink data of the terminal device, so that the second core network device can send the downlink data of the terminal device to the terminal device through the SDT. Therefore, when the terminal device is in the inactive state, the terminal device can directly obtain the downlink data without waiting to be paged by a network side, to improve data transmission efficiency and reduce power consumption of the terminal device.

In an implementation, the access network device retains a context of the terminal device; or a device sending the first message is an access network device that retains a context of the terminal device.

In an implementation, the method further includes: obtaining a context of the terminal device.

In an implementation, the method further includes: after determining that the SDT is completed, the access network device sends a second message, where the second message is used to trigger the second core network device to buffer the downlink data of the terminal device; or the second message indicates cycle duration of an extended discontinuous reception cycle for monitoring, by the terminal device in an inactive state, a paging message initiated by a radio access network.

In an implementation, that the access network device determines that the SDT is completed includes: If the access network device receives a null data packet or a data packet in a preset format, the access network device determines that the SDT is completed.

In an implementation, that the access network device determines that the SDT is completed includes: When receiving first uplink information from the terminal device or first downlink data from the second core network device, the access network device starts a timer, where timing duration of the timer is preset duration. When the timer expires, if second uplink information from the terminal device or second downlink data from the second core network device is not received, the access network device determines that the SDT is completed.

In an implementation, the method further includes: The access network device sends a third message to the terminal device, where the third message indicates the terminal device to enter the inactive state.

In an implementation, the method further includes: The access network device releases the terminal device to the inactive state, and retains, for the terminal device, the context of the terminal device and a connection to a first core network device that is associated with the terminal device.

In an implementation, the method further includes: receiving a first response message of the first message, where the first response message is used to acknowledge that the second core network device is triggered to stop or cancel buffering the downlink data of the terminal device, or the first response message is used to acknowledge that data transmission can be performed between the terminal device and an access network.

In an implementation, the method further includes: sending a sixth message, where the sixth message is used to trigger the second core network device to start to buffer the downlink data of the terminal device.

In an implementation, the access network device is an access network device to which a cell that the terminal device currently camps on belongs.

According to a second aspect, this application provides a data transmission method. The method is applicable to a scenario in which a terminal device in an RRC inactive state performs information transmission by using a small data process. The method is performed by a first core network device or a module in the first core network device. Herein, an example in which the method is performed by the first core network device is used for description. The method includes: The first core network device receives a first message from an access network device, where the first message is used to trigger a second core network device to stop buffering downlink data of the terminal device. The first core network device sends a fourth message to the second core network device based on the first message, where the fourth message indicates the second core network device to stop buffering the downlink data of the terminal device, or the fourth message indicates that data transmission can be performed between the terminal device and an access network.

In an implementation, the method further includes: receiving a sixth message from the access network device, where the sixth message is used to trigger the second core network device to start to buffer the downlink data of the terminal device; and sending a seventh message to the second core network device based on the sixth message, where the seventh message indicates the second core network device to start to buffer the downlink data of the terminal device, or the seventh message indicates that data transmission cannot be performed between the terminal device and the access network.

According to a third aspect, this application provides a data transmission method. The method is applicable to a scenario in which a terminal device in an RRC inactive state performs information transmission by using a small data process. The method is performed by a second core network device or a module in the second core network device. Herein, an example in which the method is performed by the second core network device is used for description. The method includes: The second core network device receives a fourth message from a first core network device, where the fourth message indicates the second core network device to stop buffering downlink data of the terminal device, or the fourth message indicates that data transmission can be performed between the terminal device and an access network. The second core network device stops, based on the fourth message, buffering the downlink data of the terminal device, and sends the downlink data of the terminal device to an access network device.

In an implementation, the access network device retains a context of the terminal device; or the access network device is a device that retains a context of the terminal device.

In an implementation, the method further includes: receiving a seventh message from the first core network device, where the seventh message indicates to start to buffer the downlink data of the terminal device, or the seventh message indicates that data transmission cannot be performed between the terminal device and the access network.

According to a fourth aspect, this application provides a data transmission method. The method is applicable to a scenario in which a terminal device in an RRC inactive state performs information transmission by using a small data process. The method is performed by an access network device or a module in the access network device. Herein, an example in which the method is performed by the access network device is used for description. The method includes: after determining that small data transmission SDT of the terminal device is completed, the access network device generates a second message. The access network device sends the second message to a first core network device, where the second message is used to trigger a second core network device to buffer downlink data of the terminal device.

In the foregoing process, when determining that the SDT of the terminal device is completed, the access network device may trigger the second core network device to buffer the downlink data of the terminal device, so that data from a network side is buffered on the network side when the terminal device is in the inactive state, to reduce a quantity of times that the network side pages the terminal device, and reduce power consumption of the terminal device.

In an implementation, that the access network device determines that the small data transmission SDT of the terminal device is completed includes:
If the access network device receives a null data packet or a data packet in a preset format, the access network device determines that the SDT is completed.

In an implementation, that the access network device determines that the small data transmission SDT of the terminal device is completed includes:
When receiving first uplink information from the terminal device or first downlink data from the second core network device, the access network device starts a timer, where timing duration of the timer is preset duration. When the timer expires, if second uplink information from the terminal device or second downlink data from the second core network device is not received, the access network device determines that the SDT is completed.

In an implementation, the method further includes: The access network device sends a third message to the terminal device, where the third message indicates the terminal device to enter the inactive state.

In an implementation, the access network device retains a context of the terminal device.

According to a fifth aspect, this application provides a data transmission method. The method is applicable to a scenario in which a terminal device in an RRC inactive state performs information transmission by using a small data process. The method is performed by a first core network device or a module in the first core network device. Herein, an example in which the method is performed by the first core network device is used for description. The method includes: The first core network device receives a second message from an access network device, where the second message is used to trigger a second core network device to buffer downlink data of the terminal device. The first core network device sends a fifth message to the second core network device based on the second message, where the fifth message indicates the second core network device to buffer the downlink data of the terminal device, or the fifth message indicates the terminal device to enter the inactive state.

According to a sixth aspect, this application provides a data transmission method. The method is applicable to a scenario in which a terminal device in an RRC inactive state performs information transmission by using a small data process. The method is performed by a second core network device or a module in the second core network device. Herein, an example in which the method is performed by the second core network device is used for description. The method includes: The second core network device receives a fifth message from a first core network device, where the fifth message indicates the second core network device to buffer downlink data of the terminal device, or the fifth message indicates the terminal device to enter the inactive state. The second core network device buffers the downlink data of the terminal device based on the fifth message.

According to a seventh aspect, this application provides a data transmission method. The method is applicable to a scenario in which a terminal device in an RRC inactive state performs information transmission by using a small data process. The method is performed by a second core network device or a module in the second core network device. Herein, an example in which the method is performed by the second core network device is used for description. The method includes: The second core network device receives uplink information from the terminal device through small data transmission SDT, and sends a buffer release request message to a first core network device, where the buffer release request message is used to request to stop buffering downlink data of the terminal device. The second core network device stops buffering the downlink data of the terminal device, and sends the buffered downlink data to the terminal device through the SDT.

In the foregoing process, when the terminal device triggers the SDT, the second core network device determines that the terminal device can performs data transmission, to stop or cancel buffering the downlink data of the terminal device, and send the downlink data to the terminal device through the SDT. Therefore, when the terminal device is in the inactive state, the terminal device can directly obtain the downlink data without waiting to be paged by a network side, to improve data transmission efficiency and reduce power consumption of the terminal device.

In an implementation, the method further includes: The second core network device receives a buffer release response message from the first core network device, where the buffer release response message is used to respond to the buffer release request message.

In an implementation, the method further includes: After determining that the SDT is completed, the second core network device buffers the downlink data of the terminal device.

In an implementation, the method further includes: The second core network device sends a buffer enable request message to the first core network device, where the buffer enable request message indicates to request to buffer the downlink data of the terminal device.

In an implementation, that the second core network device determines that the SDT is completed includes: If the second core network device receives a null data packet or a data packet in a preset format, the second core network device determines that the SDT is completed.

In an implementation, that the second core network device determines that the SDT is completed includes: When receiving first uplink information from the terminal device, the second core network device starts a timer, where timing duration of the timer is preset duration. When the timer expires, if second uplink information from the terminal device is not received, the second core network device determines that the SDT is completed.

According to an eighth aspect, this application provides a data transmission method. The method is applicable to a scenario in which a terminal device in an RRC inactive state performs information transmission by using a small data process. The method is performed by a second core network device or a module in the second core network device. Herein, an example in which the method is performed by the second core network device is used for description. The method includes: After determining that small data transmission SDT of the terminal device is completed, the second core network device sends a buffer enable request message to a first core network device, where the buffer enable request message is used to request to buffer downlink data of the terminal device. The second core network device receives a buffer release acknowledgment message from the first core network device, and buffers the downlink data of the terminal device.

In the foregoing process, when determining that the SDT of the terminal device is completed, the second core network device may actively buffer the downlink data of the terminal device, so that data from a network side is buffered on the network side when the terminal device is in the inactive state, to reduce a quantity of times that the network side pages the terminal device, and reduce power consumption of the terminal device.

In an implementation, that the second core network device determines that the SDT of the terminal device is completed includes: If the second core network device receives a null data packet or a data packet in a preset format, the second core network device determines that the SDT is completed.

In an implementation, that the second core network device determines that the SDT of the terminal device is completed includes: When receiving first uplink information from the terminal device, the second core network device starts a timer, where timing duration of the timer is preset duration. When the timer expires, if second uplink information from the terminal device is not received, the second core network device determines that the SDT is completed.

According to a ninth aspect, this application further provides a communication apparatus, and the communication apparatus implements any method provided in any one of the first aspect to the eighth aspect. The communication apparatus may be implemented by hardware, or may be implemented by hardware executing corresponding software. The hardware or the software includes one or more units or modules corresponding to the foregoing functions.

**In** a possible implementation, the communication apparatus includes: a processor. The processor is configured to support the communication apparatus in performing a corresponding function of the network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device.

In a possible implementation, the communication apparatus includes corresponding function modules configured to implement the steps in the foregoing method. The function may be implemented by hardware, or may be implemented by hardware executing corresponding software. The hardware or software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in the first aspect to the eighth aspect. The details are not described herein.

According to a tenth aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement the method according to any one of the first aspect to the eighth aspect and any possible implementation of any one of the first aspect to the eighth aspect by using a logic circuit or by executing code instructions.

According to an eleventh aspect, a communication apparatus is provided. The communication apparatus includes a processor and an interface circuit. The interface circuit is configured to: receive a signal from a communication apparatus other than the communication apparatus, and transmit the signal to the processor; or send a signal from the processor to a communication apparatus other than the communication apparatus. The processor is configured to implement a functional module of the method according to any one of the first aspect to the eighth aspect and any possible implementation of any one of the first aspect to the eighth aspect by using a logic circuit or by executing code instructions.

According to a twelfth aspect, a computer-readable storage medium is provided. The computer-readable storage medium stores a computer program or instructions. When the computer program or the instructions are executed by a processor, the method according to any one of the first aspect to the eighth aspect and any possible implementation of any one of the first aspect to the eighth aspect is implemented.

According to a thirteenth aspect, a computer program product storing instructions is provided. When the instructions are run by a processor, the method according to any one of the first aspect to the eighth aspect and any possible implementation of any one of the first aspect to the eighth aspect is implemented.

According to a fourteenth aspect, a chip system is provided. The chip system includes a processor, and may further include a memory, configured to implement the method according to any one of the first aspect to the eighth aspect and any possible implementation of any one of the first aspect to the eighth aspect. The chip system may include a chip, or may include a chip and another discrete component.

According to a fifteenth aspect, a communication system is provided. The system includes an apparatus configured to implement the method provided in the first aspect, an apparatus configured to implement the method provided in the second aspect, and an apparatus configured to implement the method provided in the third aspect.

According to a sixteenth aspect, a communication system is provided. The system includes an apparatus configured to implement the method provided in the fourth aspect, an apparatus configured to implement the method provided in the fifth aspect, and an apparatus configured to implement the method provided in the sixth aspect.

### BRIEF DESCRIPTION OF DRAWINGS

FIG. 1 is a diagram of a network architecture applicable to an embodiment of this application;
FIG. 2 is a diagram of an SDT procedure according to an embodiment of this application;
FIG. 3 is a diagram of an SDT procedure according to an embodiment of this application;
FIG. 4 is a schematic flowchart of a data transmission method according to an embodiment of this application;
FIG. 5 is a schematic flowchart of a data transmission method according to an embodiment of this application;
FIG. 6 is a schematic flowchart of a data transmission method according to an embodiment of this application;
FIG. 7 is a schematic flowchart of a data transmission method according to an embodiment of this application;
FIG. 8 is a schematic flowchart of a data transmission method according to an embodiment of this application;
FIG. 9 is a schematic flowchart of a data transmission method according to an embodiment of this application;
FIG. 10 is a schematic flowchart of a data transmission method according to an embodiment of this application;
FIG. 11 is a schematic flowchart of a data transmission method according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

The following describes in detail embodiments of this application with reference to the accompanying drawings of the specification.

Technical solutions in embodiments of this application may be applied to various communication systems, for example, a long term evolution (long term evolution, LTE) system, a new radio (new radio, NR) system, or another communication system like a future communication system. This is not specifically limited herein.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. A person of ordinary skill in the art may know that, as a new service scenario emerges, the technical solutions provided in embodiments of this application are also applicable to a similar technical problem.

In embodiments of this application, a terminal device is a device with a wireless transceiver function or a chip that may be disposed in the device. The device with the wireless transceiver function may also be referred to as user equipment (user equipment, UE), an access terminal, a subscriber unit, a subscriber station, a mobile station, a remote station, a remote terminal, a mobile device, a user terminal, a user agent, or a user apparatus. During actual application, the terminal device in embodiments of this application may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing device with the wireless transceiver function and the chip that may be disposed in the device are collectively referred to as a terminal device.

In embodiments of this application, an access network device may be a radio access device in various standards, and the access network device may also be referred to as a radio access network (radio access network, RAN) device. For example, the access network device may be a next-generation NodeB (next-generation NodeB, gNB) in an NR system, or may be an evolved NodeB (evolved NodeB, eNB), a radio network controller (radio network controller, RNC) or a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like. Alternatively, the access network device may be a gNB or a transmission point (TRP or TP) in a 5G (NR) system, or one antenna panel or one group of antenna panels (including a plurality of antenna panels) of a base station in a 5G system. Alternatively, the access network device may be a network node, for example, a baseband unit (BBU) or a DU in a central unit-distributed (central unit-distributed, CU-DU) architecture, that constitutes a gNB or a transmission point.

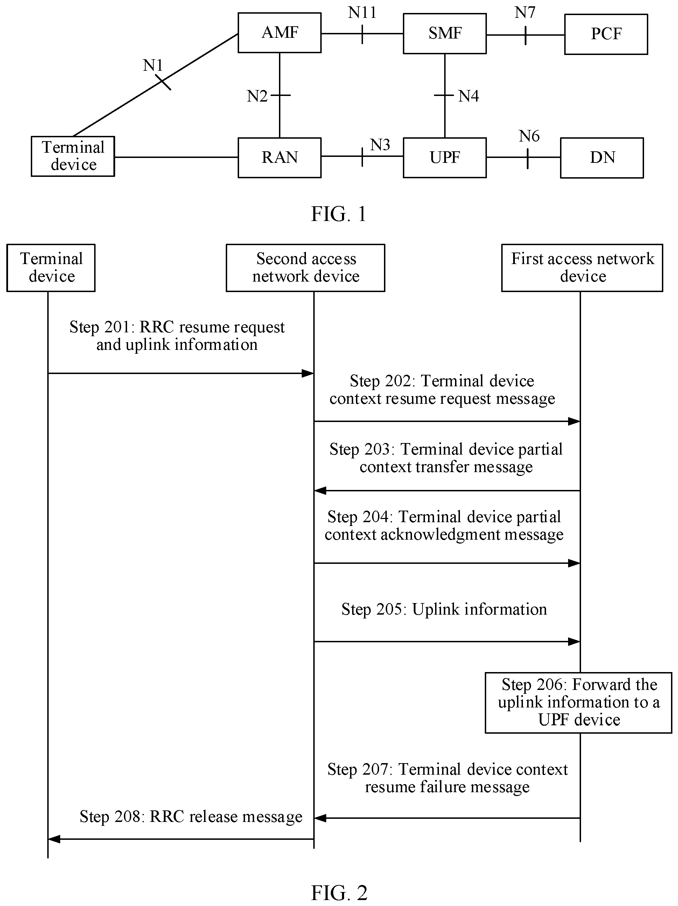

For ease of understanding embodiments of this application, a communication system shown in FIG. 1 is first used as an example to describe in detail a communication system applicable to an embodiment of this application. FIG. 1 is a diagram of a communication system applicable to an embodiment of this application. As shown in FIG. 1, the communication system includes the following devices or network elements. A session management function (session management function, SMF) may be configured to perform functions such as session management (including session establishment, modification, and deletion management) in a mobile network.

A user plane function (user plane function, UPF) is a functional network element of a user plane, and main functions include packet routing and forwarding, quality of service (quality of service, QoS) processing of user plane data, and the like.

Main functions of an access and mobility management function (access and mobility management function, AMF) include a termination point of a radio access network control plane, a termination point of non-access signaling, mobility management, access authorization or authentication, and the like.

A policy control function (policy control function, PCF) is mainly responsible for functions such as establishment, releasing, and modification of a user plane transmission path.

A data network (data network, DN) may be a network that provides a service for a terminal device. For example, some DNs may provide an internet access function for the terminal device.

The foregoing is merely an example. The communication system may further include another device or network element, and examples are not described herein one by one.

The terminal device may implement data transmission in an inactive state by using a small data transmission (small data transmission, SDT) technology, to reduce signaling transmission and reduce power consumption of the terminal device. SDT may be classified into random access (random access, RA)-based SDT and type 1 (Type1) configured grant (configured grant, CG)-based SDT. Based on a UE context position, the RA-based SDT is classified into RA-based SDT without UE context relocation (RA-based SDT without UE context relocation) and RA-based SDT with UE context relocation (RA-based SDT with UE context relocation).

In an RA-based SDT procedure, a first access network device that transitions the terminal device from a connected state to the inactive state and a second access network device that is used when the terminal device initiates the SDT may be different access network devices. In this application, the first access network device releases the terminal device to the inactive state, and retains, for the terminal device, a context of the terminal device and a connection to a first core network device that is associated with the terminal device. In other words, the first access network device is an access network device (last serving gNB) that last serves the terminal device before the terminal device is in the inactive state, and may also be referred to as an anchor access network device. The second access network device is an access network device to which a cell that the terminal device currently camps on belongs, and may also be referred to as a new access network device (new gNB) or a receiving access network device (receiving gNB).

FIG. 2 is a diagram of an SDT procedure according to this application. FIG. 2 shows an RA-based SDT procedure without UE context relocation. In other words, in the SDT procedure, an anchor access network device does not perform migration.

Step 201: A terminal device sends an RRC resume request and uplink information to a second access network device.

Before performing the SDT procedure, the terminal device is in an inactive state. The RRC resume request includes information such as an inactive radio network temporary identifier (inactive radio network temporary identifier, I-RNTI) and a cause value. The uplink information includes at least one of uplink data and uplink signaling.

Step 202: The second access network device determines a first access network device based on the I-RNTI, and sends a terminal device context resume request message to the first access network device.

The terminal device context resume request message is used to obtain a context of the terminal, or is used to request the first access network device to perform data transmission or small data transmission. The terminal device context resume request message includes information such as the I-RNTI.

Optionally, the terminal device context resume request message further includes a small data transmission indication (SDT indication), or the terminal device context resume request message and the small data transmission indication (SDT indication) are sent to the first access network device together.

In this process, the first access network device determines not to perform anchor relocation, so that the context of the terminal device can be retained.

Step 203: The first access network device sends a terminal device partial context transfer message to the second access network device.

The terminal device partial context transfer message includes a partial context of the terminal device (UE partial context). The partial context may be a radio link control (radio link control, RLC) partial context. Therefore, the first access network device retains a PDCP entity, and the second access network device establishes an RLC entity corresponding to the SDT.

Step 204: The second access network device sends a terminal device partial context acknowledgment message to the first access network device.

Step 205: The second access network device sends the uplink information of the terminal device to the first access network device.

Step 206: The first access network device forwards the uplink information to a UPF device. A specific process is not described.

Optionally, if the terminal device further needs to transmit uplink data, the terminal device may send the uplink data to the second access network device. The second access network device sends the uplink data to the first access network device, and the first access network device forwards the uplink data to the UPF device.

Step 207: When transmission of the uplink information of the terminal device is completed, the first access network device sends a terminal device context resume failure message to the second access network device.

The terminal device context resume failure message includes an RRC release message, and the RRC release message indicates the terminal device to release an RRC connection.

Step 208: The second access network device sends the RRC release message to the terminal device.

After receiving the RRC release message, the terminal device continues to remain in the inactive state.

The foregoing process is an RA-based SDT procedure without UE context relocation. The following describes an RA-based SDT procedure with UE context relocation. In other words, in the SDT procedure, an anchor access network device performs migration.

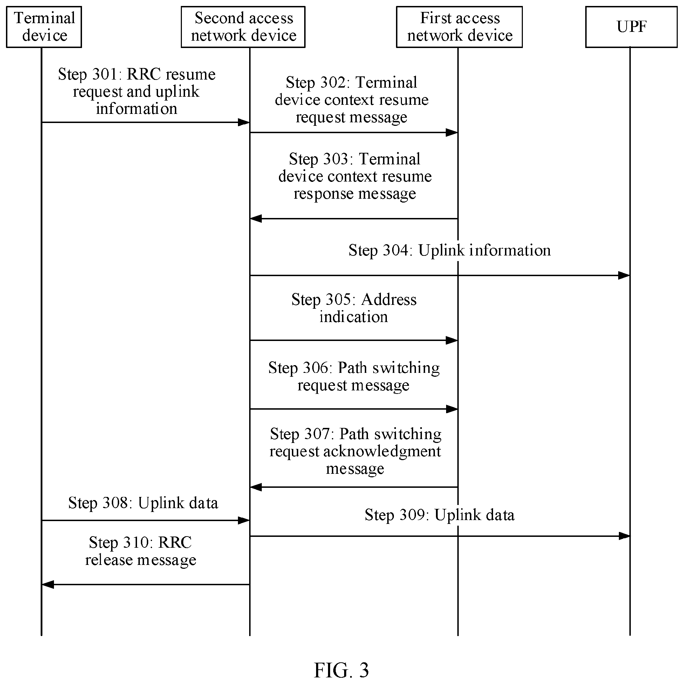

FIG. 3 is a diagram of an SDT procedure according to this application. Before performing the SDT procedure, a terminal device is in an inactive state.

Step 301: The terminal device sends an RRC resume request and uplink information to a second access network device.

Step 302: The second access network device determines a first access network device based on an I-RNTI, and sends a terminal device context resume request message to the first access network device.

Step 301 and step 302 are the same as step 201 and step 202 in FIG. 2, and details are not described again.

In this process, the first access network device determines to perform anchor relocation, to forward a context of the terminal device to the second access network device.

Step 303: The first access network device sends a terminal device context resume response message to the second access network device.

The terminal device context resume response message includes the entire context of the terminal device.

Step 304: The second access network device forwards the uplink information of the terminal device to a UPF device.

The second access network device forwards the uplink information to the UPF device. A specific process is not described.

Optionally, step 305: The second access network device sends an address indication (Xn-U address indication) of the second access network device to the first access network device, where the address indication indicates a tunnel address for forwarding downlink data of the terminal device.

Sending of the address indication can prevent a loss of downlink data buffered on the first access network device.

Step 306: The second access network device sends a path switching request message to the first access network device.

Step 307: The first access network device sends a path switching request acknowledgment message to the second access network device.

A data forwarding path between the first access network device and the second access network device is established by using step 306 and step 307. Then, the second access network device sends, to the first access network device, uplink data buffered before step 307, the first access network device sends the uplink data to a core network, and the first access network device may further send, to the terminal device via the second access network device, downlink data received from the core network.

Optionally, step 308: If the terminal device further needs to transmit uplink data, the terminal device may send the uplink data to the second access network device.

Step 309: The second access network device directly forwards the uplink data from the terminal device to the UPF device.

Step 310: When transmission of the uplink information of the terminal device is completed, the second access network device sends an RRC release message to the terminal device.

After receiving the RRC release message, the terminal device continues to remain in the inactive state.

In the SDT procedures in FIG. 2 and FIG. 3, when duration of an eDRX cycle that is configured by a network side for the terminal device and that is used to monitor a RAN paging message is greater than 10.24 seconds, and when the terminal device is in the inactive state, the network side configures an SMF or a UPF to buffer downlink data that needs to be sent to the terminal device. Therefore, the downlink data cannot be forwarded to the terminal device in the SDT procedures.

Therefore, this application provides a method. When cycle duration of an inactive eDRX cycle of a terminal device is greater than 10.24 seconds, the terminal device can simultaneously transmit uplink information and downlink data by using an SDT procedure, to improve data transmission efficiency of the terminal device in an RRC inactive state, and reduce power consumption of the terminal device.

This application may be applied to an SDT procedure in which an access network device triggers a core network device to stop buffering the downlink data of the terminal device, so that the core network device forwards the downlink data of the terminal device to the terminal device through SDT. The following provides descriptions separately by using different embodiments. The core network device may be a UPF, or may be an SMF. The access network device may be an anchor access network device, or may be a new access network device. For ease of description, in this application, the anchor access network device is referred to as a first access network device, and the new access network device is referred to as a second access network device.

Message names in the following procedures in this application are merely examples. During actual application, the message names may change. The message names are not limited in this application.

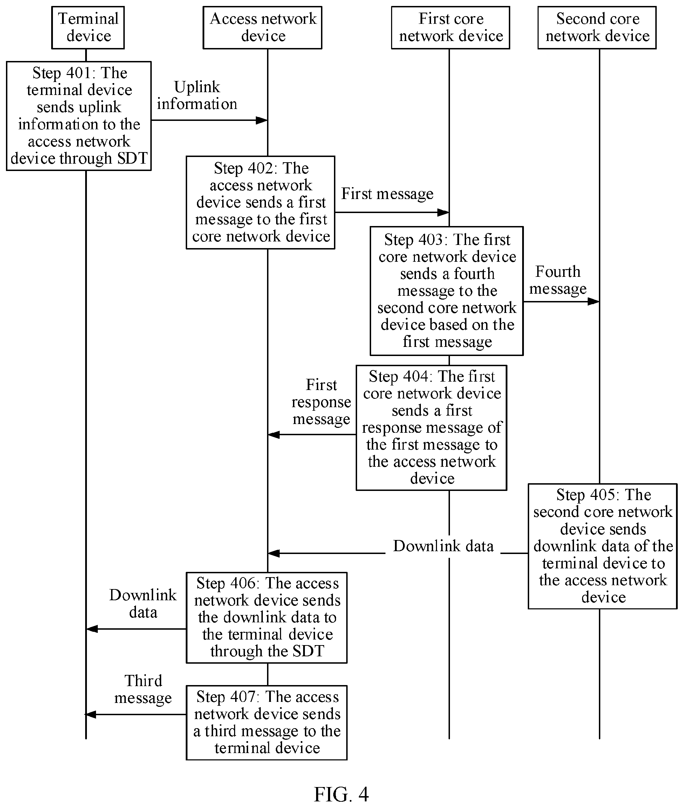

FIG. 4 is a schematic flowchart of a data transmission method according to an embodiment of this application. In this method procedure, an access network device may be an anchor access network device, or may be a new access network device.

Optionally, before step 401, the following steps may further exist.

The access network device sends a sixth message to a first core network device, where the sixth message is used to trigger a second core network device (for example, an SMF or a UPF) to start to buffer downlink data of a terminal device, or the sixth message indicates that data transmission cannot be performed between the terminal device and an access network. For example, the access network device may be a device like a base station, and the first core network device may be a device like an AMF. A name of the sixth message is not limited. For example, the sixth message may be a mobile terminated (mobile terminated, MT) communication handling request (MT communication handling request) message.

The first core network device sends a seventh message to the second core network device, where the seventh message indicates the second core network device to start to buffer the downlink data of the terminal device, or the seventh message indicates that data transmission cannot be performed between the terminal device and the access network. This is not limited in this application. The seventh message may be determined based on the sixth message. For example, the second core network device is the SMF, and a name of the seventh message is not limited. For example, the seventh message may be an Nsmf PDU session update session management (session management, SM) context request (Nsmf_PDUSession_UpdateSMContext Request) message.

The second core network device starts, based on the seventh message, to buffer the downlink data of the terminal device, or determines that data transmission cannot be performed between the terminal device and the access network.

Step 401: The terminal device sends uplink information to the access network device through SDT, and correspondingly, the access network device receives the uplink information from the terminal device through the SDT.

In an implementation, before step 401, the terminal device is in an inactive state, and duration of an eDRX cycle that is configured by a network side for the terminal device and that is used to monitor a RAN paging message is greater than 10.24 seconds. A specific process in which the terminal device initiates the SDT is not limited in this application. The terminal device may further send an RRC resume request to the access network device. Specific content included in the RRC resume request is not limited in this application.

In an implementation, the terminal device may send the RRC resume request and the uplink information by using a message 3 in a four-step random access procedure or a message A in a two-step random access procedure.

In this application, the uplink information includes at least one of uplink data and uplink signaling. The uplink data may be referred to as uplink small data (small data). In other words, a total amount of to-be-sent uplink data is less than a preconfigured threshold. The uplink data is data that can be directly sent by the terminal device in the inactive state.

In an implementation, the SDT may be configured grant-based SDT, or may be random access-based SDT. If the SDT is the configured grant-based SDT, a resource used for transmission of the uplink information is a configured grant resource used for the SDT; or if the SDT is the random access-based SDT, a resource used for transmission of the uplink information is a random access resource used for the SDT.

In this application, the access network device is a device that retains a context of the terminal device. For example, in a first possible scenario, the access network device is a first access network device (namely, the anchor access network device). In this scenario, when a second access network device requests to obtain the context of the terminal device from the first access network device, the first access network device determines not to perform anchor relocation, to retain the context of the terminal device. In this scenario, the terminal device may first send the uplink information to the second access network device, and then the second access network device forwards the uplink information to the first access network device.

In a second possible scenario, the access network device is a second access network device (namely, the new access network device). In this scenario, when the second access network device requests to obtain the context of the terminal device from a first access network device, the first access network device determines to perform anchor relocation, to forward the entire context of the terminal device to the second access network device. In this scenario, the access network device may directly obtain the uplink information from the terminal device.

Step 402: The access network device sends a first message to the first core network device, and correspondingly, the first core network device receives the first message from the access network device.

The first message is used to trigger the second core network device to stop or cancel buffering the downlink data of the terminal device; or the first message indicates that data transmission can be performed between the terminal device and the access network, or the first message indicates the second core network device to stop or cancel buffering the downlink data of the terminal device.

In an implementation, the first core network device is the AMF, and the second core network device is the UPF or the SMF.

In an implementation, a message type of the first message is an N2 message, and the N2 message may be enhanced based on an existing message. For example, the N2 message may be an RRC inactive transition report (RRC INACTIVE TRANSITION REPORT) message, or the N2 message may be a newly defined message. This is not limited in this application.

In the first possible scenario, if the access network device is the anchor access network device, before step 402, step 202 to step 204 are further included. For details, refer to the procedure shown in FIG. 2. Details are not described herein again.

In the second possible scenario, if the access network device is the new access network device, before step 402, step 302 and step 303 are further included. For details, refer to the procedure shown in FIG. 3. Details are not described herein again.

Step 403: The first core network device sends a fourth message to the second core network device based on the first message, and correspondingly, the second core network device receives the fourth message from the first core network device.

The fourth message indicates the second core network device to stop or cancel buffering the downlink data of the terminal device, or the fourth message indicates that data transmission can be performed between the terminal device and the access network. Alternatively, the fourth message is used to deliver a new rule to the second core network device. For example, the new rule is that the second core network device no longer needs to buffer the downlink data of the terminal device.

A specific name of the fourth message is not limited. For example, the fourth message may be a protocol data unit (protocol data unit, PDU) session update session modification context request (session update session modification context request) message. The fourth message may further indicate that the SMF may update a PDU session associated with the terminal device.

Implementation 1: If the first core network device is the AMF, and the second core network device is the SMF, the AMF may directly send the fourth message to the SMF, and the SMF may further send a response message to the AMF. For example, the response message is a PDU session update session modification context response message.

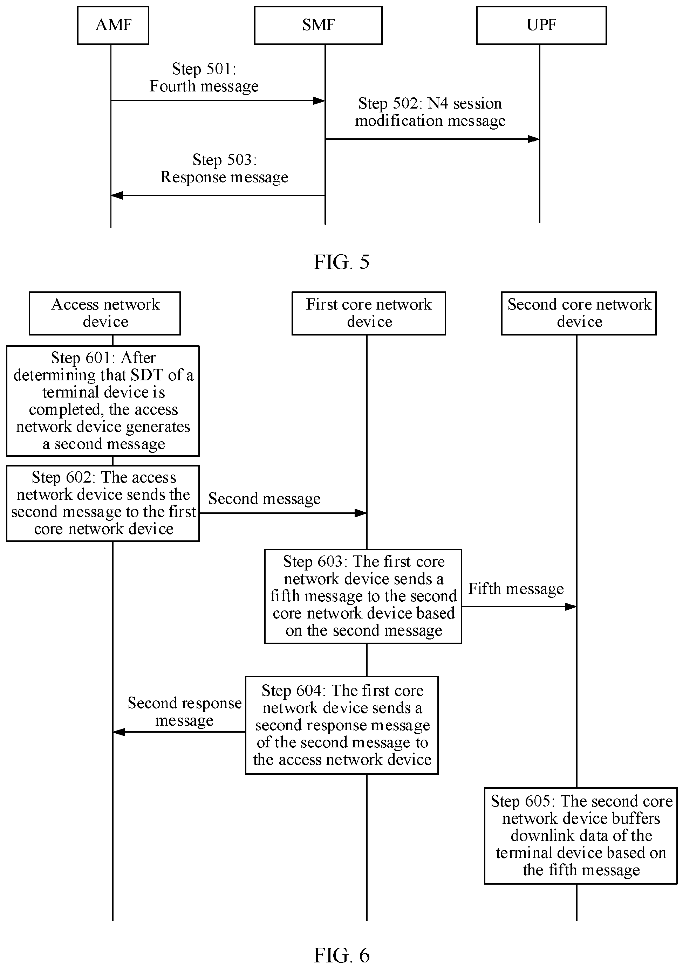

Implementation 2: If the first core network device is the AMF, and the second core network device is the UPF, refer to a procedure shown in FIG. 5.

Step 501: The AMF sends the fourth message to the SMF, where the fourth message is the PDU session update session modification context request message.

In an implementation, the SMF may forward the fourth message to the UPF. In another implementation, the SMF may generate a new message based on the fourth message, and forward the generated message to the UPF. An example is shown in step 502.

Step 502: The SMF sends an N4 session modification message to the UPF based on the fourth message.

The N4 session modification message indicates the second core network device to stop or cancel buffering the downlink data of the terminal device, the N4 session modification message indicates that data transmission can be performed between the terminal device and the access network, or the N4 session modification message is used to deliver a new rule to the UPF. For example, the new rule is that the UPF no longer needs to buffer the downlink data of the terminal device.

Step 503: The SMF sends a response message to the AMF. For example, the response message is a PDU session update session modification context response message.

In the foregoing procedure, the AMF indicates, via the SMF, the UPF not to buffer the downlink data of the terminal device, so that the UPF can transmit the downlink data of the terminal device through the SDT.

Optionally, step 404: The first core network device sends a first response message of the first message to the access network device.

The first response message is used to acknowledge that the second core network device is triggered to stop or cancel buffering the downlink data of the terminal device; or the first response message is used to acknowledge that data transmission can be performed between the terminal device and the access network.

In an implementation, the first response message may be sent by the first core network device when the first core network device receives a response message from the second core network device.

In this application, after obtaining the fourth message, the second core network device may stop, based on the fourth message, buffering the downlink data of the terminal device. After the second core network device determines not to buffer the downlink data of the terminal device anymore, if the second core network device obtains the downlink data of the terminal device, the second core network device needs to forward the downlink data of the terminal device to the terminal device.

Optionally, if the second core network device has buffered the downlink data of the terminal device, the second core network device may send the downlink data of the terminal device through the SDT. For example, the following steps may be performed:
Step 405: The second core network device sends the downlink data of the terminal device to the access network device, and correspondingly, the access network device receives the downlink data from the second core network device.
Step 406: The access network device sends the downlink data to the terminal device through the SDT.

Optionally, the access network device may further receive the uplink small data from the terminal device, and forward the uplink small data to the UPF.

After the SDT of the terminal device is completed, the access network device may indicate the terminal device to enter the inactive state. Details are as follows.

Optionally, step 407: The access network device sends a third message to the terminal device, where the third message indicates the terminal device to enter the inactive state.

In an implementation, the third message may be an RRC release message. The terminal device receives the third message, and enters the inactive state again.

In the foregoing process, when the terminal device triggers the SDT, the access network device may trigger the second core network device to stop or cancel buffering the downlink data of the terminal device, so that the second core network device can send the downlink data of the terminal device to the terminal device through the SDT. Therefore, when the terminal device is in the inactive state, the terminal device can directly obtain the downlink data without waiting to be paged by the network side, to improve data transmission efficiency and reduce power consumption of the terminal device.

In this application, after the SDT is completed, the access network device may further trigger the second core network device to buffer the downlink data of the terminal device, to avoid a case in which the terminal device in the inactive state is frequently woken up. Details are described below.

FIG. 6 is a schematic flowchart of a data transmission method according to an embodiment of this application. In this method procedure, an access network device may be an anchor access network device, or may be a new access network device. The method procedure shown in FIG. 6 may be implemented in combination with the method procedure shown in FIG. 4, or may be implemented separately. This is not limited in this application.

Step 601: After determining that SDT of a terminal device is completed, the access network device generates a second message.

The access network device retains a context of the terminal device. For details, refer to the foregoing descriptions. Details are not described herein again.

In an implementation, a message type of the second message is an N2 message. The second message is used to trigger a second core network device to buffer downlink data of the terminal device; or the second message indicates cycle duration of an eDRX cycle for monitoring, by the terminal device in an inactive state, a paging message initiated by a radio access network.

In this application, there may be a plurality of implementations for determining that the SDT of the terminal device is completed. In an implementation, if the access network device receives a null data packet or a data packet in a preset format, the access network device determines that the SDT is completed. In an implementation, when receiving first uplink information from the terminal device or first downlink data from the second core network device, the access network device starts a timer, where timing duration of the timer is preset duration. When the timer expires, if second uplink information from the terminal device or second downlink data from the second core network device is not received, the access network device determines that the SDT is completed. The first uplink information is uplink information sent by the terminal device in the SDT, and the first downlink data is downlink data sent by the second core network device in the SDT.

Step 602: The access network device sends the second message to a first core network device, and correspondingly, the first core network device receives the second message from the access network device.

In an implementation, the first core network device is an AMF, and the second core network device is a UPF or an SMF.

Step 603: The first core network device sends a fifth message to the second core network device based on the second message, and correspondingly, the second core network device receives the fifth message from the first core network device.

The fifth message indicates the second core network device to buffer the downlink data of the terminal device, or the fifth message indicates the terminal device to enter the inactive state. Alternatively, the fifth message is used to deliver a new rule to the second core network device. For example, the new rule is: buffering the downlink data of the terminal device.

Implementation 1: If the first core network device is the AMF, and the second core network device is the SMF, the AMF may directly send a fourth message to the SMF, and the SMF may further send a response message to the AMF. For example, the response message is a PDU session update session modification context response message.

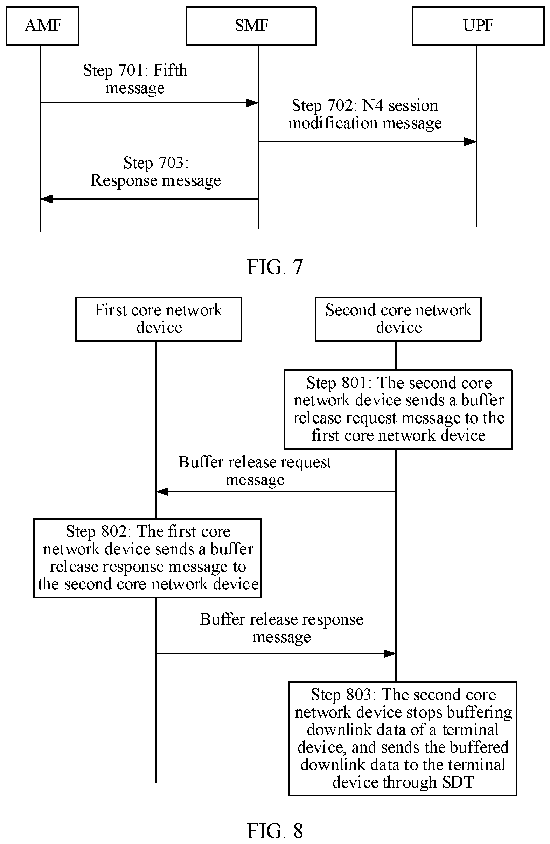

Implementation 2: If the first core network device is the AMF, and the second core network device is the UPF, refer to a procedure shown in FIG. 7.

Step 701: The AMF sends the fifth message to the SMF. For example, the fifth message is a PDU session update session modification context request message.

In an implementation, the SMF may forward the fifth message to the UPF. In another implementation, the SMF may generate a new message based on the fifth message, and forward the generated message to the UPF. An example is shown in step 702.

Step 702: The SMF sends an N4 session modification message to the UPF based on the fifth message.

The N4 session modification message indicates the second core network device to buffer the downlink data of the terminal device, the N4 session modification message indicates the terminal device to enter the inactive state, or the N4 session modification message is used to deliver a new rule to the UPF. For example, the new rule is that the UPF buffers the downlink data of the terminal device.

Step 703: The SMF sends a response message to the AMF. For example, the response message is a PDU session update session modification context response message.

In the foregoing procedure, the UPF can buffer the downlink data of the terminal device when the terminal device is in the inactive state.

Optionally, step 604: The first core network device sends a second response message of the second message to the access network device.

The second response message is used to acknowledge that the second core network device buffers the downlink data of the terminal device.

In an implementation, the second response message may be sent by the first core network device when the first core network device receives a response message from the second core network device.

Step 605: The second core network device buffers the downlink data of the terminal device based on the fifth message.

In an implementation, if there is buffered downlink data that needs to be sent to the terminal device at an interval of one buffer cycle, a core network sends a message to an access network through an N2 interface, to enable RAN paging. When the terminal device responds to the RAN paging and resumes an RRC connection, the second core network device may send the buffered data to the terminal device via the access network. A specific process is not described again.

In the foregoing process, when the SDT of the terminal device is completed, the access network device may trigger the second core network device to buffer the downlink data of the terminal device, so that the second core network device can buffer the downlink data when the terminal device is in the inactive state, to avoid a case in which the terminal device in the inactive state is frequently woken up, and reduce power consumption of the terminal device.

In this application, alternatively, a core network device that buffers the downlink data of the terminal device may autonomously trigger stopping or canceling buffering the downlink data of the terminal device. Details are described below.

FIG. 8 is a schematic flowchart of a data transmission method according to an embodiment of this application. This method procedure may be performed after a terminal device triggers SDT. The method procedure shown in FIG. 8 may be implemented in combination with the method procedure shown in FIG. 6, or may be implemented separately. This is not limited in this application. The method procedure shown in FIG. 8 may be further implemented in combination with the procedure shown in FIG. 2 or FIG. 3.

Step 801: A second core network device receives uplink information from the terminal device through the SDT, and sends a buffer release request message to a first core network device.

The buffer release request message is used to request to stop or cancel buffering downlink data of the terminal device.

In an implementation, before step 801, the terminal device initiates the SDT. Before the terminal device initiates the SDT, the terminal device is in an inactive state, and duration of an eDRX cycle that is configured by a network side for the terminal device and that is used to monitor a RAN paging message is greater than 10.24 seconds.

The second core network device may receive the uplink information of the terminal device via an access network device. A specific process is not described again.

Optionally, step 802: The first core network device sends a buffer release response message to the second core network device, and correspondingly, the second core network device receives the buffer release response message from the first core network device, where the buffer release response message is used to respond to the buffer release request message.

Step 803: The second core network device stops buffering the downlink data of the terminal device, and sends the buffered downlink data to the terminal device through the SDT.

After sending the buffer release request message, or after receiving the buffer release response message, the second core network device no longer buffers the downlink data of the terminal device.

If the second core network device has buffered the downlink data of the terminal device, the second core network device may send the buffered downlink data through the SDT. For a specific process, refer to the foregoing descriptions. Details are not described herein again.

In the foregoing process, when the terminal device triggers the SDT, the access network device may trigger the second core network device to stop or cancel buffering the downlink data of the terminal device, so that the second core network device can send the downlink data of the terminal device to the terminal device through the SDT. Therefore, when the terminal device is in the inactive state, the terminal device can directly obtain the downlink data without waiting to be paged by the network side, to improve data transmission efficiency and reduce power consumption of the terminal device.

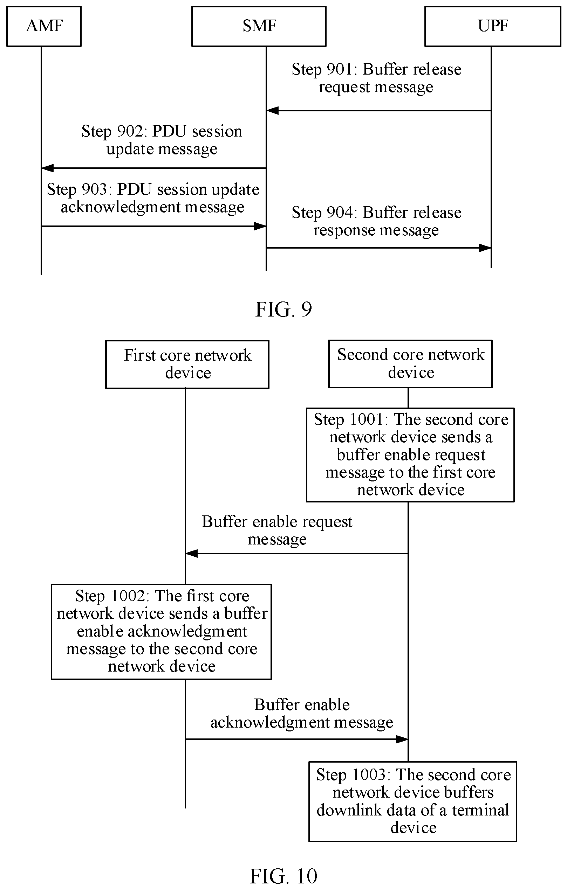

In the foregoing procedure, the first core network device is an AMF, and the second core network device is a UPF or an SMF. If the second core network device is the UPF, the second core network device may send the buffer release request message to the AMF via the SMF. In an implementation, after obtaining the buffer release request message from the UPF, the SMF may forward the buffer release request message to the AMF. In another implementation, the SMF may generate a new message based on the buffer release request message, and forward the generated message to the AMF. An example is shown in FIG. 9.

Step 901: The UPF sends the buffer release request message to the SMF.

Step 902: The SMF sends a PDU session update message to the AMF based on the buffer release request message.

The PDU session update message indicates to stop or cancel buffering the downlink data of the terminal device. The PDU session update message may further indicate that all SMFs associated with the terminal device can update a PDU session associated with the terminal device.

Step 903: The AMF sends a PDU session update acknowledgment message to the SMF.

Step 904: The SMF sends the buffer release response message to the UPF.

In a possible implementation, there may be a plurality of UPFs. For example, a UPF 1 buffers the downlink data of the terminal device, and a UPF 2 receives the uplink information of the terminal device. In this case, after receiving the buffer release request message, the AMF may indicate the UPF 1 to stop or cancel buffering the downlink data of the terminal device. For details, refer to the procedure shown in FIG. 5. Details are not described herein again.

In this application, after the SDT is completed, a core network device that buffers the downlink data of the terminal device may further buffer the downlink data of the terminal device again, to avoid a case in which the terminal device in the inactive state is frequently woken up. Details are described below.

FIG. 10 is a schematic flowchart of a data transmission method according to an embodiment of this application. This method procedure shown in FIG. 10 may be implemented in combination with the method procedure shown in FIG. 4 or FIG. 8, or may be implemented separately. This is not limited in this application. The method procedure shown in FIG. 10 may be further implemented in combination with the procedure shown in FIG. 2 or FIG. 3.

Step 1001: After determining that SDT of a terminal device is completed, a second core network device sends a buffer enable request message to a first core network device, where the buffer enable request message is used to request to buffer downlink data of the terminal device.

In this application, there may be a plurality of implementations for determining that the SDT of the terminal device is completed. In an implementation, if the second core network device receives a null data packet or a data packet in a preset format, the second core network device determines that the SDT is completed. In an implementation, when receiving first uplink information from the terminal device or sending first downlink data of the terminal device, the second core network device starts a timer, where timing duration of the timer is preset duration. When the timer expires, if second uplink information from the terminal device is not received or there is no second downlink data that needs to be sent to the terminal device, the second core network device determines that the SDT is completed.

Optionally, step 1002: The first core network device sends a buffer enable acknowledgment message to the second core network device, and correspondingly, the second core network device receives the buffer enable acknowledgment message from the first core network device.

Step 1003: The second core network device buffers the downlink data of the terminal device.

In the foregoing process, when the SDT of the terminal device is completed, the second core network device may buffer the downlink data when the terminal device is in an inactive state, to avoid a case in which the terminal device in the inactive state is frequently woken up, and reduce power consumption of the terminal device.

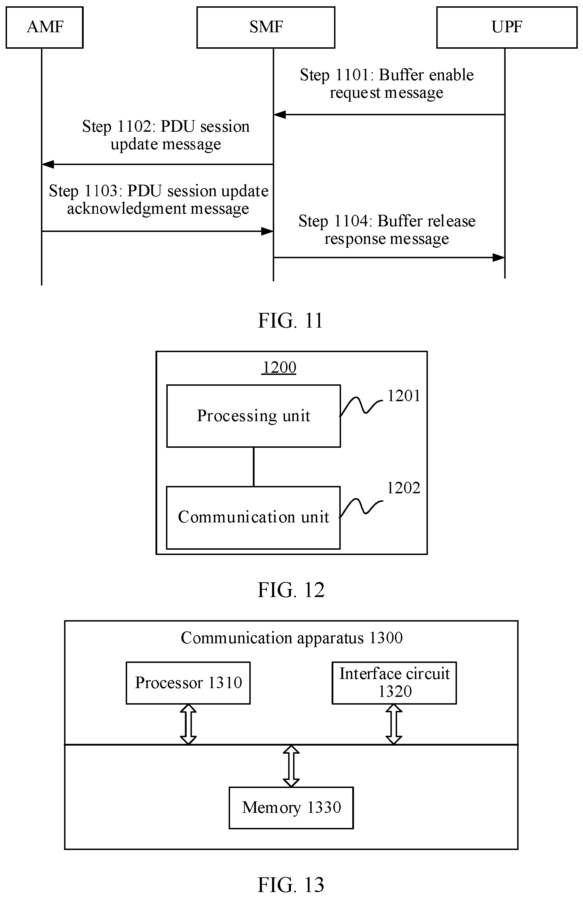

In the foregoing procedure, the first core network device is an AMF, and the second core network device is a UPF or an SMF. If the second core network device is the UPF, the second core network device may send the buffer enable request message to the AMF via the SMF. In an implementation, after obtaining the buffer enable request message from the UPF, the SMF may forward the buffer enable request message to the AMF. In another implementation, the SMF may generate a new message based on the buffer enable request message, and forward the generated message to the AMF. An example is shown in FIG. 11.

Step 1101: The UPF sends the buffer enable request message to the SMF.

Step 1102: The SMF sends a PDU session update message to the AMF based on the buffer enable request message.

The PDU session update message indicates to buffer the downlink data of the terminal device. The PDU session update message may further indicate the terminal device to enter the inactive state, and duration of an eDRX cycle used by the terminal device to monitor a RAN paging message is greater than 10.24 seconds.

Step 1103: The AMF sends a PDU session update acknowledgment message to the SMF.

Step 1104: The SMF sends a buffer release response message to the UPF.

In a possible implementation, there may be a plurality of UPFs. For example, a UPF 1 buffers the downlink data of the terminal device, and a UPF 2 sends the buffer enable request message. In this case, after receiving the buffer enable request message, the AMF may indicate the UPF 1 to buffer the downlink data of the terminal device. For details, refer to the procedure shown in FIG. 7. Details are not described herein again.

In the foregoing embodiments provided in this application, the methods provided in embodiments of this application are described from a perspective of interaction between devices. To implement functions in the methods provided in embodiments of this application, the access network device, the core network device, or the terminal device may include a hardware structure and/or a software module, and implements the functions in a form of the hardware structure, the software module, or a combination of the hardware structure and the software module. Whether a specific function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 12, an embodiment of this application further provides an apparatus 1200, configured to implement a function of the access network device, the core network device, or the terminal device in the foregoing methods. For example, the apparatus may be a software module or a chip system. In this embodiment of this application, the chip system may include a chip, or may include a chip and another discrete component. The apparatus 1200 may include a processing unit 1201 and a communication unit 1202.

In this embodiment of this application, the communication unit may also be referred to as a transceiver unit, and may include a sending unit and/or a receiving unit, which are respectively configured to perform sending and receiving steps of the access network device, the core network device, or the terminal device in the foregoing method embodiments.

The following describes, in detail with reference to FIG. 12 and FIG. 13, communication apparatuses provided in embodiments of this application. It should be understood that descriptions of apparatus embodiments correspond to the descriptions of the method embodiments. Therefore, for content that is not described in detail, refer to the method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1202 and that is configured to implement a receiving function may be considered as a receiving unit, and a component that is in the communication unit 1202 and that is configured to implement a sending function may be considered as a sending unit, in other words, the communication unit 1202 includes a receiving unit and a sending unit. The receiving unit sometimes may also be referred to as a receiver machine, a receiver, a receive circuit, or the like. The sending unit sometimes may also be referred to as a transmitter machine, a transmitter, a transmit circuit, or the like.

**In** an implementation, the communication apparatus 1200 may perform the following functions.

A processing unit is configured to receive, via a communication unit, uplink information from a terminal device through small data transmission SDT, where a resource used for transmission of the uplink information is a random access resource or a configured grant resource used for the SDT.

The processing unit is configured to: send a first message via the communication unit, where the first message is used to trigger a second core network device to stop buffering downlink data of the terminal device; and receive downlink data from the second core network device, and send the downlink data to the terminal device through the SDT.

**In** an implementation, the communication apparatus 1200 may perform the following functions.

A processing unit is configured to receive a first message from an access network device via a communication unit, where the first message is used to trigger a second core network device to stop buffering downlink data of a terminal device.

The processing unit is configured to send a fourth message to the second core network device based on the first message via the communication unit, where the fourth message indicates the second core network device to stop buffering the downlink data of the terminal device, or the fourth message indicates that data transmission can be performed between the terminal device and an access network.

In an implementation, the communication apparatus 1200 may perform the following functions.

A communication unit is configured to receive a fourth message from a first core network device, where the fourth message indicates a second core network device to stop buffering downlink data of a terminal device, or the fourth message indicates that data transmission can be performed between a terminal device and an access network.

A processing unit is configured to stop, based on the fourth message, buffering the downlink data of the terminal device.

The communication unit is configured to send the downlink data of the terminal device to an access network device.

In an implementation, the communication apparatus 1200 may perform the following functions.

A processing unit is configured to: after determining that small data transmission SDT of a terminal device is completed, generate a second message.

A communication unit is configured to send the second message to a first core network device, where the second message is used to trigger a second core network device to buffer downlink data of the terminal device.

In an implementation, the communication apparatus 1200 may perform the following functions.

A communication unit is configured to receive a second message from an access network device, where the second message is used to trigger a second core network device to buffer downlink data of a terminal device.

A processing unit is configured to send a fifth message to the second core network device based on the second message, where the fifth message indicates the second core network device to buffer the downlink data of the terminal device, or the fifth message indicates the terminal device to enter an inactive state.

In an implementation, the communication apparatus 1200 may perform the following functions.

A communication unit is configured to receive a fifth message from a first core network device, where the fifth message indicates a second core network device to buffer downlink data of a terminal device, or the fifth message indicates a terminal device to enter an inactive state.

A processing unit is configured to buffer the downlink data of the terminal device based on the fifth message.

In an implementation, the communication apparatus 1200 may perform the following functions.

A communication unit is configured to: receive uplink information from a terminal device through small data transmission SDT, and send a buffer release request message to a first core network device, where the buffer release request message is used to request to stop buffering downlink data of the terminal device.

A processing unit is configured to: stop buffering the downlink data of the terminal device, and send the buffered downlink data to the terminal device through the SDT.

In an implementation, the communication apparatus 1200 may perform the following functions.

A processing unit is configured to: after determining that small data transmission SDT of a terminal device is completed, send a buffer enable request message to a first core network device via a communication unit, where the buffer enable request message is used to request to buffer downlink data of the terminal device.

The communication unit is configured to: receive a buffer release acknowledgment message from the first core network device, and buffer the downlink data of the terminal device. The foregoing is merely an example. The processing unit 1201 and the communication unit 1202 may further perform other functions. For more detailed descriptions, refer to the related descriptions in the foregoing method embodiments. Details are not described herein again.

FIG. 13 shows an apparatus 1300 according to an embodiment of this application. The apparatus shown in FIG. 13 may be an implementation of a hardware circuit of the apparatus shown in FIG. 12. The communication apparatus is applicable to the foregoing flowchart, and performs a function of the access network device, the core network device, or the terminal device in the foregoing method embodiments. For ease of description, FIG. 13 shows only main components of the communication apparatus.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to: store instructions executed by the processor 1310, store input data required by the processor 1310 to run instructions, or store data generated after the processor 1310 runs instructions.

When the communication apparatus 1300 is configured to implement the foregoing method, the processor 1310 is configured to implement the function of the processing unit 1201, and the interface circuit 1320 is configured to implement the function of the communication unit 1202.

When the communication apparatus is a chip used in an access network device, the chip in the access network device implements the function of the access network device in the foregoing method embodiments. The chip of the access network device receives information from another module (for example, a radio frequency module or an antenna) in a terminal device. Alternatively, the chip of the access network device sends information to another module (for example, a radio frequency module or an antenna) in the access network device.

When the communication apparatus is a chip used in a core network device, the chip in the core network device implements the function of the core network device in the foregoing method embodiments. The chip of the core network device receives information from another module (for example, a radio frequency module or an antenna) in the core network device. Alternatively, the chip of the core network device sends information to another module (for example, a radio frequency module or an antenna) in the core network device.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Alternatively, the processor and the storage medium may exist in a network device or a terminal device as discrete components.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A data transmission method, comprising:
receiving uplink information from a terminal device through small data transmission SDT, wherein a resource used for transmission of the uplink information is a random access resource or a configured grant resource used for the SDT;
sending a first message, wherein the first message is used to trigger a second core network device to stop buffering downlink data of the terminal device; and
receiving downlink data from the second core network device, and sending the downlink data to the terminal device through the SDT.

2. The method according to claim 1, wherein a device sending the first message is an access network device that retains a context of the terminal device.

3. The method according to claim 1, wherein the method further comprises:
obtaining a context of the terminal device.

4. The method according to any one of claims 1 to 3, wherein the method further comprises:
after determining that the SDT is completed, sending a second message, wherein the second message is used to trigger the second core network device to buffer the downlink data of the terminal device; or the second message indicates cycle duration of an extended discontinuous reception cycle for monitoring, by the terminal device in an inactive state, a paging message initiated by a radio access network.

5. The method according to claim 4, wherein the determining that the SDT is completed comprises:
if receiving a null data packet or a data packet in a preset format, determining that the SDT is completed.

6. The method according to claim 4, wherein the determining that the SDT is completed comprises:
when receiving first uplink information from the terminal device or first downlink data from the second core network device, starting a timer, wherein timing duration of the timer is preset duration; and
when the timer expires, if second uplink information from the terminal device or second downlink data from the second core network device is not received, determining that the SDT is completed.

7. The method according to claim 4, wherein the method further comprises:
sending a third message to the terminal device, wherein the third message indicates the terminal device to enter the inactive state.

8. The method according to any one of claims 1 to 7, wherein the method further comprises:
releasing the terminal device to the inactive state, and retaining, for the terminal device, the context of the terminal device and a connection to a first core network device that is associated with the terminal device.

9. The method according to any one of claims 1 to 7, wherein the device sending the first message is an access network device to which a cell that the terminal device currently camps on belongs.

10. The method according to any one of claims 1 to 9, wherein the method further comprises:
receiving a first response message of the first message, wherein the first response message is used to acknowledge that the second core network device is triggered to stop or cancel buffering the downlink data of the terminal device, or the first response message is used to acknowledge that data transmission can be performed between the terminal device and an access network.

11. The method according to any one of claims 1 to 9, wherein the method further comprises:
sending a sixth message, wherein the sixth message is used to trigger the second core network device to start to buffer the downlink data of the terminal device.

12. A data transmission method, comprising:
receiving a first message from an access network device, wherein the first message is used to trigger a second core network device to stop buffering downlink data of a terminal device; and
sending a fourth message to the second core network device based on the first message, wherein the fourth message indicates the second core network device to stop buffering the downlink data of the terminal device, or the fourth message indicates that data transmission can be performed between the terminal device and an access network.

13. The method according to claim 12, wherein the method further comprises:
receiving a sixth message from the access network device, wherein the sixth message is used to trigger the second core network device to start to buffer the downlink data of the terminal device; and
sending a seventh message to the second core network device based on the sixth message, wherein the seventh message indicates the second core network device to start to buffer the downlink data of the terminal device, or the seventh message indicates that data transmission cannot be performed between the terminal device and the access network.

14. A data transmission method, comprising:
receiving a fourth message from a first core network device, wherein the fourth message indicates the second core network device to stop buffering downlink data of a terminal device, or the fourth message indicates that data transmission can be performed between the terminal device and an access network; and
stopping, based on the fourth message, buffering the downlink data of the terminal device, and sending the downlink data of the terminal device to an access network device.

15. The method according to claim 14, wherein the access network device is a device that retains a context of the terminal device.

16. The method according to claim 14, wherein the method further comprises: receiving a seventh message from the first core network device, wherein the seventh message indicates to start to buffer the downlink data of the terminal device, or the seventh message indicates that data transmission cannot be performed between the terminal device and the access network.

17. A data transmission method, comprising:
after determining that small data transmission SDT of a terminal device is completed, generating a second message; and
sending the second message to a first core network device, wherein the second message is used to trigger a second core network device to buffer downlink data of the terminal device.

18. The method according to claim 17, wherein the determining that small data transmission SDT of a terminal device is completed comprises:
if receiving a null data packet or a data packet in a preset format, determining that the SDT is completed.

19. The method according to claim 17, wherein the determining that small data transmission SDT of a terminal device is completed comprises:
when receiving first uplink information from the terminal device or first downlink data from the second core network device, starting a timer, wherein timing duration of the timer is preset duration; and
when the timer expires, if second uplink information from the terminal device or second downlink data from the second core network device is not received, determining that the SDT is completed.

20. The method according to any one of claims 17 to 19, wherein the method further comprises:
sending a third message to the terminal device, wherein the third message indicates the terminal device to enter an inactive state.

21. The method according to any one of claims 17 to 20, wherein the method further comprises: retaining a context of the terminal device.

22. A data transmission method, comprising:
receiving a second message from an access network device, wherein the second message is used to trigger a second core network device to buffer downlink data of a terminal device; and
sending a fifth message to the second core network device based on the second message, wherein the fifth message indicates the second core network device to buffer the downlink data of the terminal device, or the fifth message indicates the terminal device to enter an inactive state.

23. A data transmission method, comprising:
receiving a fifth message from a first core network device, wherein the fifth message indicates the second core network device to buffer downlink data of a terminal device, or the fifth message indicates the terminal device to enter an inactive state; and
buffering the downlink data of the terminal device based on the fifth message.

24. A data transmission method, comprising:
receiving uplink information from a terminal device through small data transmission SDT, and sending a buffer release request message to a first core network device, wherein the buffer release request message is used to request to stop buffering downlink data of the terminal device; and
stopping buffering the downlink data of the terminal device, and sending the buffered downlink data to the terminal device through the SDT.

25. The method according to claim 24, wherein the method further comprises:
receiving a buffer release response message from the first core network device, wherein the buffer release response message is used to respond to the buffer release request message.

26. The method according to claim 24 or 25, wherein the method further comprises:
after determining that the SDT is completed, buffering the downlink data of the terminal device.

27. The method according to claim 26, wherein the method further comprises:
sending a buffer enable request message to the first core network device, wherein the buffer enable request message indicates to request to buffer the downlink data of the terminal device.

28. The method according to claim 26, wherein the determining that the SDT is completed comprises:
if receiving a null data packet or a data packet in a preset format, determining that the SDT is completed.

29. The method according to claim 26, wherein the determining that the SDT is completed comprises:
when receiving first uplink information from the terminal device, starting a timer, wherein timing duration of the timer is preset duration; and
when the timer expires, if second uplink information from the terminal device is not received, determining that the SDT is completed.

30. A data transmission method, comprising:
after determining that small data transmission SDT of a terminal device is completed, sending a buffer enable request message to a first core network device, wherein the buffer enable request message is used to request to buffer downlink data of the terminal device; and
receiving a buffer release acknowledgment message from the first core network device, and buffering the downlink data of the terminal device.

31. The method according to claim 30, wherein the determining that SDT of a terminal device is completed comprises:
if receiving a null data packet or a data packet in a preset format, determining that the SDT is completed.

32. The method according to claim 30, wherein the determining that SDT of a terminal device is completed comprises:
when receiving first uplink information from the terminal device, starting a timer, wherein timing duration of the timer is preset duration; and
when the timer expires, if second uplink information from the terminal device is not received, determining that the SDT is completed.

33. A communication apparatus, comprising:
a processing unit, configured to receive, via a communication unit, uplink information from a terminal device through small data transmission SDT, wherein a resource used for transmission of the uplink information is a random access resource or a configured grant resource used for the SDT, wherein
the processing unit is configured to: send a first message via the communication unit, wherein the first message is used to trigger a second core network device to stop buffering downlink data of the terminal device; and receive downlink data from the second core network device, and send the downlink data to the terminal device through the SDT.

34. The apparatus according to claim 33, wherein the communication apparatus is an access network device that retains a context of the terminal device.

35. The apparatus according to claim 33, wherein the communication unit is further configured to:
obtain a context of the terminal device.

36. The apparatus according to any one of claims 33 to 35, wherein the communication unit is further configured to:
after determining that the SDT is completed, send a second message, wherein the second message is used to trigger the second core network device to buffer the downlink data of the terminal device; or the second message indicates cycle duration of an extended discontinuous reception cycle for monitoring, by the terminal device in an inactive state, a paging message initiated by a radio access network.

37. The apparatus according to claim 36, wherein the processing unit is specifically configured to:
if receiving a null data packet or a data packet in a preset format, determine that the SDT is completed.

38. The apparatus according to claim 36, wherein the processing unit is specifically configured to:
when receiving first uplink information from the terminal device or first downlink data from the second core network device, start a timer, wherein timing duration of the timer is preset duration; and
when the timer expires, if second uplink information from the terminal device or second downlink data from the second core network device is not received, determine that the SDT is completed.

39. The apparatus according to claim 36, wherein the processing unit is specifically configured to:
send a third message to the terminal device, wherein the third message indicates the terminal device to enter the inactive state.

40. The apparatus according to any one of claims 33 to 39, wherein the processing unit is specifically configured to:
release the terminal device to the inactive state, and retain, for the terminal device, the context of the terminal device and a connection to a first core network device that is associated with the terminal device.

41. The apparatus according to any one of claims 33 to 39, wherein the communication apparatus is an access network device to which a cell that the terminal device currently camps on belongs.

42. The apparatus according to any one of claims 33 to 41, wherein the communication unit is further configured to:
receive a first response message of the first message, wherein the first response message is used to acknowledge that the second core network device is triggered to stop or cancel buffering the downlink data of the terminal device, or the first response message is used to acknowledge that data transmission can be performed between the terminal device and an access network.

43. The apparatus according to any one of claims 33 to 41, wherein the communication unit is further configured to:
send a sixth message, wherein the sixth message is used to trigger the second core network device to start to buffer the downlink data of the terminal device.

44. A communication apparatus, comprising:
a processing unit, configured to receive a first message from an access network device via a communication unit, wherein the first message is used to trigger a second core network device to stop buffering downlink data of a terminal device, wherein
the processing unit is configured to send a fourth message to the second core network device based on the first message via the communication unit, wherein the fourth message indicates the second core network device to stop buffering the downlink data of the terminal device, or the fourth message indicates that data transmission can be performed between the terminal device and an access network.

45. The apparatus according to claim 44, wherein the communication unit is further configured to:
receive a sixth message from the access network device, wherein the sixth message is used to trigger the second core network device to start to buffer the downlink data of the terminal device; and
send a seventh message to the second core network device based on the sixth message, wherein the seventh message indicates the second core network device to start to buffer the downlink data of the terminal device, or the seventh message indicates that data transmission cannot be performed between the terminal device and the access network.

46. A communication apparatus, comprising:
a communication unit, configured to receive a fourth message from a first core network device, wherein the fourth message indicates the second core network device to stop buffering downlink data of a terminal device, or the fourth message indicates that data transmission can be performed between the terminal device and an access network; and
a processing unit, configured to stop, based on the fourth message, buffering the downlink data of the terminal device, wherein
the communication unit is configured to send the downlink data of the terminal device to an access network device.

47. The apparatus according to claim 46, wherein the access network device is a device that retains a context of the terminal device.

48. The apparatus according to claim 46, wherein the communication unit is further configured to:
receive a seventh message from the first core network device, wherein the seventh message indicates to start to buffer the downlink data of the terminal device, or the seventh message indicates that data transmission cannot be performed between the terminal device and the access network.

49. A communication apparatus, comprising:
a processing unit, configured to: after determining that small data transmission SDT of a terminal device is completed, generate a second message; and
a communication unit, configured to send the second message to a first core network device, wherein the second message is used to trigger a second core network device to buffer downlink data of the terminal device.

50. The apparatus according to claim 49, wherein the processing unit is specifically configured to:
if receiving a null data packet or a data packet in a preset format, determine that the SDT is completed.

51. The apparatus according to claim 49, wherein the processing unit is specifically configured to:
when receiving first uplink information from the terminal device or first downlink data from the second core network device, start a timer, wherein timing duration of the timer is preset duration; and
when the timer expires, if second uplink information from the terminal device or second downlink data from the second core network device is not received, determine that the SDT is completed.

52. The apparatus according to any one of claims 49 to 51, wherein the communication unit is further configured to:
send a third message to the terminal device, wherein the third message indicates the terminal device to enter an inactive state.

53. The apparatus according to any one of claims 49 to 52, wherein the communication unit is configured to retain a context of the terminal device.

54. A communication apparatus, comprising:
a communication unit, configured to receive a second message from an access network device, wherein the second message is used to trigger a second core network device to buffer downlink data of a terminal device; and
a processing unit, configured to send a fifth message to the second core network device based on the second message, wherein the fifth message indicates the second core network device to buffer the downlink data of the terminal device, or the fifth message indicates the terminal device to enter an inactive state.

55. A communication apparatus, comprising:
a communication unit, configured to receive a fifth message from a first core network device, wherein the fifth message indicates the second core network device to buffer downlink data of a terminal device, or the fifth message indicates the terminal device to enter an inactive state; and
a processing unit, configured to buffer the downlink data of the terminal device based on the fifth message.

56. A communication apparatus, comprising:
a communication unit, configured to: receive uplink information from a terminal device through small data transmission SDT, and send a buffer release request message to a first core network device, wherein the buffer release request message is used to request to stop buffering downlink data of the terminal device; and
a processing unit, configured to: stop buffering the downlink data of the terminal device, and send the buffered downlink data to the terminal device through the SDT.

57. The apparatus according to claim 56, wherein the communication unit is further configured to:
receive a buffer release response message from the first core network device, wherein the buffer release response message is used to respond to the buffer release request message.

58. The apparatus according to claim 56 or 57, wherein the processing unit is further configured to:
after determining that the SDT is completed, buffer the downlink data of the terminal device.

59. The apparatus according to claim 58, wherein the communication unit is further configured to:
send a buffer enable request message to the first core network device, wherein the buffer enable request message indicates to request to buffer the downlink data of the terminal device.

60. The apparatus according to claim 58, wherein the processing unit is specifically configured to:
if receiving a null data packet or a data packet in a preset format, determine that the SDT is completed.

61. The apparatus according to claim 58, wherein the processing unit is specifically configured to:
when receiving first uplink information from the terminal device, start a timer, wherein timing duration of the timer is preset duration; and
when the timer expires, if second uplink information from the terminal device is not received, determine that the SDT is completed.

62. A communication apparatus, comprising:
a processing unit, configured to: after determining that small data transmission SDT of a terminal device is completed, send a buffer enable request message to a first core network device via a communication unit, wherein the buffer enable request message is used to request to buffer downlink data of the terminal device; and
the communication unit, configured to: receive a buffer release acknowledgment message from the first core network device, and buffer the downlink data of the terminal device.

63. The apparatus according to claim 62, wherein the processing unit is specifically configured to:
if receiving a null data packet or a data packet in a preset format, determine that the SDT is completed.

64. The apparatus according to claim 62, wherein the processing unit is specifically configured to:
when receiving first uplink information from the terminal device, start a timer, wherein timing duration of the timer is preset duration; and
when the timer expires, if second uplink information from the terminal device is not received, determine that the SDT is completed.

65. A communication apparatus, comprising a processor and a memory, wherein
the processor is configured to execute a computer program or instructions stored in the memory, and when the processor executes the computer program or instructions, the method according to any one of claims 1 to 32 is performed.

66. A chip, comprising a processor, wherein the processor is coupled to a memory and is configured to execute a computer program or instructions stored in the memory, and when the processor executes the computer program or instructions, the method according to any one of claims 1 to 32 is performed.

67. A computer-readable storage medium, storing instructions, wherein when the instructions are run on a computer, the computer is enabled to perform the method according to any one of claims 1 to 32.

68. A computer program product, storing computer-readable instructions, wherein when a communication apparatus reads and executes the computer-readable instructions, the communication apparatus is enabled to perform the method according to any one of claims 1 to 32.
